# EUROPEAN PATENT APPLICATION

(11) **EP 4 645 928 A1**
(43) Date of publication of application: **05.11.2025**
(21) Application number: 22969545.7
(22) Date of filing: 27.12.2022
(51) Int. Cl.: H04W 12/50

(54) **RELAY COMMUNICATION PROCESSING METHOD, AND APPARATUS**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/142535
(87) International publication number: WO 2024/138389

(57) **Abstract**

The present application relates to the technical field of communications and provides a relay communication processing method, and an apparatus. In the relay communication processing method, a first network element on a network side determines security protection solution information for establishing an U2U link in correspondence to an RSC and then, according to the security protection solution information, sends to UEs security indication information corresponding to the RSC. In this way, a source UE, a target UE and a relay UE which receive the security indication information may determine, on the basis of the security indication information corresponding to the RSC, the security protection solution information for establishing a U2U link under the RSC. The technical solution of the present application can be used for ensuring that the source UE and the target UE which communicate with each other by means of the relay UE use the same security protection solution information, such that the source UE and the target UE can communicate with each other under security protection, thus improving the security of 5G U2U ProSe services.

## Description

### TECHNICAL FIELD

The disclosure relates to the field of communication technology, in particular to a relay communication processing method and a relay communication processing apparatus.

### BACKGROUND

5G proximity-based services (ProSe) enable peer user equipments (UEs) to communicate with each other over a relay UE. It means that if a source UE cannot communicate with a target UE directly, the source UE will attempt to discover the relay UE to achieve communication with the target UE.

Currently, for the source UE and the target UE who communicate with each other via the relay UE, if they do not use the same security procedure, it is possible that communication from the source UE to the target UE is not protected at all, which affects the security of 5G U2U ProSe.

### SUMMARY

The disclosure proposes a relay communication processing method and a relay communication processing apparatus, which ensures that the same security procedure is used for a source user equipment (UE) and a target UE that communicate with each other via a relay UE.

According to a first aspect of embodiments of the disclosure, a relay communication processing method is provided. The method is performed by a UE, and includes: receiving a security indicator associated with a relay service code (RSC) sent by a first network element; and determining, based on the security indicator, a security procedure for establishing a U2U link under the RSC.

In some embodiments of the disclosure, before receiving the security indicator associated with the RSC sent by the first network element, the method includes: sending a key request to the first network element, in which the key request carries an RSC; and receiving the security indicator associated with the RSC sent by the first network element, includes: receiving a key response and a security indicator associated with the RSC carried in the key request returned by the first network element.

In some embodiments of the disclosure, before receiving the security indicator associated with the RSC sent by the first network element, the method includes: sending a request for service authorization to the first network element; and receiving the security indicator associated with the RSC sent by the first network element includes: receiving service authorization information and a security indicator associated with an authorized RSC returned by the first network element.

In some embodiments of the disclosure, the security indicator associated with the authorized RSC is an indicator for a Layer-2 or Layer-3 U2U relay service allowed to be used for the RSC; in which determining, based on the security indicator, the security procedure for establishing the U2U link under the RSC includes: determining, based on the indicator for the Layer-2 or Layer-3 U2U relay service allowed to be used for the RSC, the security procedure for establishing the U2U link under the RSC.

In some embodiments of the disclosure, after receiving the security indicator associated with the RSC sent by the first network element, the method further includes: storing the security indicator associated with the RSC; in which determining the security procedure for establishing a U2U link based on the security indicator associated with the RSC includes: determining, based on the stored security indicator associated with the RSC, the security procedure for establishing the U2U link under the RSC.

In some embodiments of the disclosure, the security procedure includes at least one of:
hop-by-hop security protection; or
E2E (E2E) security protection.

In some embodiments of the disclosure, the first network element includes one of:
a policy control function (PCF) network elemen;
a proximity-based services (ProSe) key management function (PKMF) network element;
a direct discovery name management function (DDNMF) network element; and
a ProSe application server.

According to a second aspect of embodiments of the disclosure, a relay communication processing method is provided. The method is performed by a first network element, and includes: determining a security procedure associated with an RSC for establishing a U2U link; and sending a security indicator associated with the RSC to a UE according to the security procedure.

In some embodiments of the disclosure, before determining the security procedure associated with the RSC for establishing the U2U link, the method includes: receiving a key request sent by the UE, in which the key request carries the RSC; and sending the security indicator associated with the RSC to the UE according to the security procedure includes: returning the security indicator associated with the RSC and a key response to the UE according to the security procedure.

In some embodiments of the disclosure, before determining the security procedure for establishing a U2U link associated with the RSC, the method includes: receiving a request for service authorization sent by the UE; and sending the security indicator associated with the RSC to the UE according to the security procedure includes: returning the security indicator associated with the RSC and service authorization information to the UE according to the security procedure.

In some embodiments of the disclosure, the security indicator associated with the RSC is an indicator for a Layer-2 or a Layer-3 U2U relay service allowed to be used for the RSC.

In some embodiments of the disclosure, the security procedure includes at least one of:
hop-by-hop security protection; or
E2E security protection.

In some embodiments of the disclosure, the first network element includes one of:
a PCF network element;
a PKMF network element;
a DDNMF network element; and
a ProSe application server network element.

According to a third aspect of embodiments of the disclosure, a relay communication processing apparatus is provided. The apparatus is configured in a UE, and includes: a first receiving module, configured to receive a security indicator associated with an RSC sent by a first network element; and a first determining module, configured to determine, based on the security indicator, a security procedure for establishing a U2U link under the RSC.

According to a fourth aspect of embodiments of the disclosure, a relay communication processing apparatus is provided. The apparatus is configured in a first network element, and includes: a second determining module, configured to determine a security procedure associated with an RSC for establishing a U2U link; and a sending module, configured to send a security indicator associated with the RSC to a UE according to the security procedure.

According to a fifth aspect of embodiments of the disclosure, a relay communication processing system is provided. The system includes: a UE and a first network element. The UE performs the method of embodiments of the first aspect of the disclosure, and the first network element performs the method of embodiments of the second aspect of the disclosure.

According to a sixth aspect of embodiments of the disclosure, a communication apparatus is provided. The communication apparatus includes: a transceiver, a memory and a processor connected to the transceiver and the memory, respectively. The processor is configured to control wireless signal reception and transmission of the transceiver by executing computer executable instructions on the memory, and is capable of implementing the method of embodiments of the first aspect of the disclosure or the method of embodiments of the second aspect of the disclosure.

According to a seventh aspect of embodiments of the disclosure, a computer storage medium is provided. The computer storage medium stores computer executable instructions, and after the computer executable instructions are executed by a processor, the method of embodiments of the first aspect of the disclosure or the method of embodiments of the second aspect of the disclosure is implemented.

An embodiment of the disclosure provides a relay communication processing method and a relay communication processing apparatus. The first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

Additional aspects and advantages of the disclosure will be given in part in the following descriptions, become apparent in part from the following descriptions, or be learned from the practice of the disclosure.

### BRIEF DESCRIPTION OF THE DRAWINGS

Above and/or additional aspects and advantages of the disclosure will become apparent and more readily appreciated from the following descriptions of embodiments made with reference to the accompanying drawings, in which:
FIG. 1 is a flowchart of a relay communication processing method according to an embodiment of the disclosure.
FIG. 2 is a flowchart of a relay communication processing method according to an embodiment of the disclosure.
FIG. 3 is a flowchart of a relay communication processing method according to an embodiment of the disclosure.
FIG. 4 is a flowchart of a relay communication processing method according to an embodiment of the disclosure.
FIG. 5 is a flowchart of a relay communication processing method according to an embodiment of the disclosure.
FIG. 6 is a flowchart of a relay communication processing method according to an embodiment of the disclosure.
FIG. 7 is a sequence diagram of a relay communication processing method according to an embodiment of the disclosure.
FIG. 8 is a sequence diagram of a relay communication processing method according to an embodiment of the disclosure.
FIG. 9 is a block diagram of a relay communication processing apparatus according to an embodiment of the disclosure.
FIG. 10 is a block diagram of a relay communication processing apparatus according to an embodiment of the disclosure.
FIG. 11 is a schematic diagram of a communication apparatus according to an embodiment of the disclosure.
FIG. 12 is a schematic diagram of a chip provided by an embodiment of the disclosure.

### DETAILED DESCRIPTION

Embodiments of the disclosure are described in detail below, and examples of which are shown in the accompanying drawings, in which the same or similar reference numerals throughout represent the same or similar elements or elements having the same or similar functions. The embodiments described below with reference to the accompanying drawings are exemplary and are intended to be used to explain the disclosure, but should not be construed as limiting the disclosure. It should be noted that, without conflict, the embodiments of the disclosure and the features in the embodiments may be combined.

The terms used in the disclosure are only for the purpose of describing specific embodiments, and are not intended to limit the embodiments of the disclosure. The singular forms of "a" and "the" used in the disclosure and attached claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various types of information. These terms are only used to distinguish the same type of information from each other rather than limiting the information. For example, without departing from the scope of the disclosure, the first information may also be referred to as the second information, and similarly, the second information may also be referred to as the first information. Depending on the context, the term "if" as used herein may be interpreted as "when", "while" or "in response to determining".

In the current version of 3GPP TR 33.847 [1], the 5G proximity-based services (ProSe) enable peer user equipments (UEs) to communicate with each other over a relay UE. It means that if the source UE cannot communicate with a target UE directly, the source UE will attempt to discover the relay UE to achieve communication with the target UE. In fact, the relay UE being an untrusted node may be attacked, allowing the security of information between the peer UEs to be compromised. A malicious relay that can establish a unicast link with the source UE as well as the target UE may conduct a man-in-the-middle (MITM) attack, which compromises the security of 5G U2U ProSe.

According to 3GPP TR 23.700-33 [2], the 5G ProSe support UE-to-UE (U2U) relay. For the relay UE, a security procedure between the source and target UEs connected to the relay UE may be realized through a hop-by-hop protection scheme, an end-to-end (E2E) protection scheme or both. The hop-by-hop protection scheme is to establish secure communication between the source UE and the relay UE, and establish secure communication between the relay UE and the target UE. The E2E protection scheme is to establish secure communication directly between the source UE and the target UE.

However, if the source and target UEs communicating with each other via the relay UE are not using the same protection scheme, for example, the source UE uses the hop-by-hop protection scheme, but the target UE uses the E2E protection scheme, the source and target UEs will not be able to communicate with each other or the traffic between the source and target UEs may not be protected at all, thereby affecting the security of 5G U2U ProSe.

Therefore, the embodiments of the disclosure propose a relay communication processing method and a relay communication processing apparatus, to ensure that peer UEs use the same security procedure in protecting communication between the source UE and the target UE via the U2U relay.

The relay communication processing method and the relay communication processing apparatus provided in the disclosure are described in detail below in combination with the accompanying drawings.

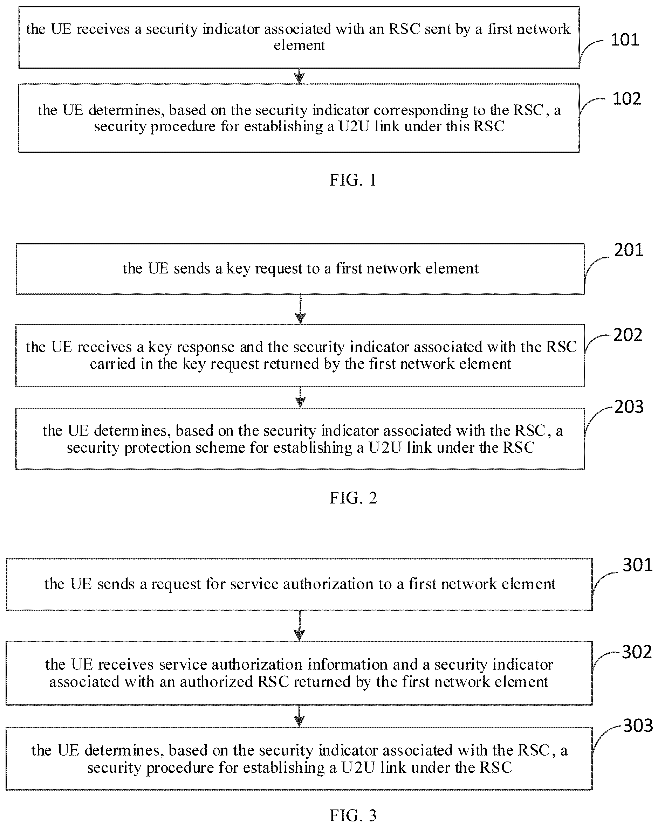

FIG. 1 is a flowchart of a relay communication processing method according to an embodiment of the disclosure. As illustrated in FIG. 1, the method is performed by a UE, which may be any one of a source UE, a target UE or a relay UE. The method includes the following steps.

At step 101, the UE receives a security indicator associated with a relay service code (RSC) sent by a first network element.

RSC stands for relay service code, which is used to identify a connection service offered by the U2U relay. Each service has a corresponding RSC. The embodiments is able to determine a corresponding security procedure for each service for establishing a U2U link, and associate the security procedure with the RSC associated with each service.

The first network element may be a network element on the network side, which is configured to determine the security procedure associated with each RSC for establishing the U2U link. That is, for the service associated with each RSC, the respectively corresponding security procedure for establishing the U2U link is determined. According to the security procedure associated with each RSC, the security indicator associated with each RSC is issued to the UE. The security indicator may be used to indicate the source UE, the target UE and the U2U relay which security procedure should be used uniformly when they discover each other and obtain a service (the service associated with the RSC) via the U2U relay, which ensures that the peer UEs use the same security procedure in protecting communication between the source UE to the target UE via the U2U relay.

In some examples, the first network element may be one of a policy control function (PCF) network element, a ProSe key management function (PKMF) network element, a direct discovery name management function (DDNMF) network element and a ProSe application server, or may be one of other network elements in a core network. The PCF network element, the PKMF network element and the DDNMF network element may be network elements in the core network.

In some examples, after receiving the security indicator associated with the RSC sent by the first network element, the UE stores the security indicator associated with the RSC for subsequent use, and a storage location may be preset according to actual needs.

At step 102, the UE determines, based on the security indicator associated with the RSC, a security procedure for establishing a U2U link under this RSC.

In some examples, the security procedure may include at least one of hop-by-hop security protection or E2E security protection. The hop-by-hop security procedure is to establish secure communication between the source UE and the relay UE, and establish secure communication between the relay UE and the target UE. The E2E security procedure is to establish security communication directly between the source UE and the target UE.

In some examples, step 102 specifically includes: determining, based on the stored security indicator associated with the RSC, the security procedure for establishing the U2U link under the RSC. Different security indicators of the same RSC may be used to indicate different security procedures for establishing the U2U link under this RSC. For example, based on a security indicator 1 associated with the RSC, it may determine that the security procedure for establishing the U2U link under this RSC is the hop-by-hop security procedure. Based on a security indicator 2 associated with the RSC, it may determine that the security procedure for establishing the U2U link under this RSC is the E2E security procedure.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

FIG. 2 is a flowchart of a relay communication processing method according to an embodiment of the disclosure. The method is performed by a UE, which may be any one of a source UE, a target UE or a relay UE. Based on the embodiment of FIG. 1, as illustrated in FIG. 2, the method includes the following steps.

At step 201, the UE sends a key request to a first network element.

The first network element may be a network element on the network side. In some examples, the first network element may be one of a PCF network element, a PKMF network element, a DDNMF network element and a ProSe application server, or may be any one of other network elements in a core network.

In a case where the UE needs to establish a secure communication link (in order to experience a target service), the UE may request the first network element for obtaining a security key, that is, the UE may send a key request. The key request carries an RSC associated with the target service. The first network element determines, based on the RSC carried in the key request, the security procedure associated with the RSC for establishing a U2U link, and determines, according to the security procedure, a security indicator associated with the RSC. The security indicator is used to indicate which security procedure to use uniformly when the source UE, the target UE, and the relay UE discover each other and obtain the target service via the U2U relay, which ensures that the peer UEs use the same security procedure in protecting communication between the source UE to the target UE via the U2U relay.

At step 202, the UE receives a key response and a security indicator associated with the RSC carried in the key request returned by the first network element.

In some examples, after receiving the security indicator associated with the RSC sent by the first network element, the UE stores the security indicator associated with the RSC for subsequent use, and a storage location may be preset according to actual needs.

At step 203, the UE determines, based on the security indicator associated with the RSC, a security procedure for establishing a U2U link under the RSC.

In some examples, the security procedure may include at least one of hop-by-hop security protection or E2E security protection.

In some examples, step 203 specifically includes: the UE determining, based on the stored security indicator associated with the RSC, the security procedure for establishing the U2U link under the RSC. If the security indicator associated with the RSC is an E2E security indicator, it may be determined that the security procedure for establishing the U2U link under the RSC is the E2E security procedure. If the security indicator associated with the RSC is empty, it may be determined that the security procedure for establishing the U2U link under the RSC is the hop-by-hop security procedure.

Alternatively, if the security indicator associated with the RSC is a hop-by-hop security indicator, it may be determined that the security procedure for establishing the U2U link under the RSC is the hop-by-hop security procedure. If the security indicator associated with the RSC is empty, it may be determined that the security procedure for establishing the U2U link under the RSC is the E2E security procedure.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

FIG. 3 is a flowchart of a relay communication processing method according to an embodiment of the disclosure. The method is performed by a UE, which may be any one of a source UE, a target UE or a relay UE. Based on the embodiment of FIG. 1, as illustrated in FIG. 3, the method includes the following steps.

At step 301, the UE sends a request for service authorization to a first network element.

The first network element may be a network element on the network side. In some examples, the first network element may be one of a PCF network element, a PKMF network element, a DDNMF network element and a ProSe application server, or may be any one of other network elements in a core network.

When the UE registers to the network, the UE will send a request for service authorization to the first network element, and the first network element will then grant the UE permissions to use certain services, that is, return service authorization information. The first network element determines, based on the RSCs associated with these open-permission services, the security procedure associated with each RSC for establishing the U2U link, and determines the security indicator associated with each RSC according to the security procedure associated with each RSC. The security indicator is used to indicate which security procedure to use uniformly when the source UE, the target UE, and the U2U relay discover each other and obtain the service (any service in these open-permission services) through via the U2U relay, which ensures that the peer UEs use the same security procedure in protecting communication between the source UE to the target UE via the U2U relay.

At step 302, service authorization information and a security indicator associated with an authorized RSC returned by the first network element are received.

In some examples, after receiving the security indicator associated with the RSC sent by the first network element, the UE stores the security indicator associated with the RSC for subsequent use, and a storage location may be preset according to actual needs.

At step 303, the UE determines, based on the security indicator associated with the RSC, a security procedure for establishing a U2U link under the RSC.

In some embodiments, the security procedure includes at least one of: hop-by-hop security protection or E2E security protection.

In some examples, step 303 specifically includes: the UE determining, based on the stored security indicator associated with the RSC, the security procedure for establishing the U2U link under the RSC.

For example, if the security indicator associated with the RSC is an E2E security indicator, it may be determined that the security procedure for establishing the U2U link under the RSC is the E2E security procedure. If the security indicator associated with the RSC is empty, it may be determined that the security procedure for establishing the U2U link under the RSC is the hop-by-hop security procedure.

This optional mode is equivalent to the first network element sending a new security indicator to the UE, so that the UE can determine, according to the new security indicator, the security procedure for establishing the U2U link under the RSC. In addition, the embodiments may also use an existing indicator to indicate which security procedure the UE uses. In some examples, the security indicator associated with the authorized RSC in step 302 may be an indicator for a Layer-2 or Layer-3 U2U relay service allowed to be used for this RSC (i.e., offered by the RSC). Correspondingly, step 303 includes: determining, based on the security indicator for the Layer-2 or Layer-3 U2U relay service allowed to be used for the RSC, the security procedure for establishing the U2U link under the RSC.

For example, if the UE receives the indicator for the Layer-3 U2U relay service allowed to be used for the RSC, it can determine that the security procedure for establishing the U2U link under this RSC is the hop-by-hop security procedure. If the UE receives the indicator for the Layer-2 U2U relay service allowed to be used for the RSC, it can determine that the security procedure for establishing the U2U link under the RSC is the E2E security procedure.

Alternatively, if the UE receives the indicator for the Layer-3 U2U relay service allowed to be used for the RSC, it can determine that the security procedure for establishing the U2U link under the RSC is the E2E security procedure. If the UE receives the indicator for the Layer-2 U2U relay service allowed to be used for the RSC, it can determine that the security procedure for establishing the U2U link under the RSC is the hop-by-hop security procedure.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

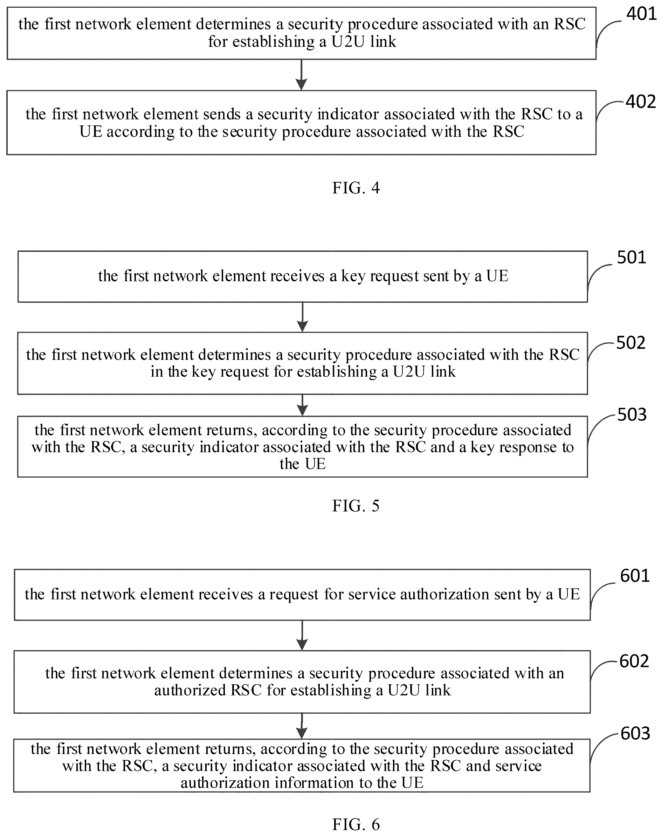

FIG. 4 is a flowchart of a relay communication processing method according to an embodiment of the disclosure. The method is performed by a first network element. As illustrated in FIG. 4, the method includes the following steps.

At step 401, the first network element determines a security procedure associated with an RSC for establishing a U2U link.

The first network element is a network element on the network side, and is configured to determine the security procedure associated with each RSC for establishing a U2U link. In some examples, the first network element may be one of a PCF network element, a PKMF network element, a DDNMF network element and a ProSe application server, or may be any one of other network elements in a core network.

In some embodiments, the security procedure includes at least one of: hop-by-hop security protection or E2E security protection.

At step 402, the first network element sends a security indicator associated with the RSC to a UE according to the security procedure associated with the RSC.

The UE is any one of a source UE, a target UE and a U2U relay. The security indicator is used to indicate which security procedure to use uniformly when the source UE, the target UE, and the U2U relay discover each other and obtain the service (the service associated with the RSC) via the U2U relay, which ensures that the peer UEs use the same security procedure in protecting communication between the source UE to the target UE via the U2U relay.

Different security indicators of the same RSC may be used to indicate different security procedures for establishing the U2U link under this RSC. For example, based on a security indicator a associated with the RSC, it may determine that the security procedure for establishing the U2U link under this RSC is the hop-by-hop security procedure. Based on a security indicator b associated with the RSC, it may determine that the security procedure for establishing the U2U link under this RSC is the E2E security procedure.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

FIG. 5 is a flowchart of a relay communication processing method according to an embodiment of the disclosure. Based on the embodiment of FIG. 4, as illustrated in FIG. 5, the method is performed by a first network element, and includes the following steps.

At step 501, the first network element receives a key request sent by a UE.

The first network element is a network element on the network side. In some examples, the first network element may be one of a PCF network element, a PKMF network element, a DDNMF network element and a ProSe application server, or may be any one of other network elements in a core network.

In a case where the UE needs to establish a secure communication link (in order to experience a target service), the UE may request the first network element for obtaining a security key, that is, the UE may send a key request. The key request carries an RSC associated with the target service.

At step 502, the first network element determines a security procedure associated with the RSC in the key request for establishing a U2U link.

The first network element determines, according to the RSC carried in the key request, the security procedure associated with the RSC for establishing the U2U link. In some examples, the security procedure includes at least one of hop-by-hop security protection or E2E security protection.

At step 503, the first network element returns, according to the security procedure associated with the RSC, a security indicator associated with the RSC and a key response to the UE.

The UE is any one of a source UE, a target UE and a U2U relay. The security indicator is used to indicate which security procedure to use uniformly when the source UE, the target UE, and the U2U relay discover each other and obtain the target service via the U2U relay, which ensures that the peer UEs use the same security procedure in protecting communication between the source UE to the target UE via the U2U relay.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

FIG. 6 is a flowchart of a relay communication processing method according to an embodiment of the disclosure. Based on the embodiment of FIG. 4, as illustrated in FIG. 6, the method is performed by a first network element, and includes the following steps.

At step 601, the first network element receives a request for service authorization sent by a UE.

The first network element may be a network element on the network side. In some examples, the first network element may be one of a PCF network element, a PKMF network element, a DDNMF network element and a ProSe application server, or may be any one of other network elements in a core network.

When the UE registers to the network, the UE will send the request for service authorization to the first network element, and the first network element will then grant the UE permissions to use certain services.

At step 602, the first network element determines a security procedure associated with an authorized RSC for establishing a U2U link.

According to those authorized RSCs, the first network element determines the security procedure corresponding respectively to each RSC for establishing the U2U link. In some examples, the security procedure includes at least one of hop-by-hop security protection or E2E security protection.

At step 603, the first network element returns, according to the security procedure associated with the RSC, a security indicator associated with the RSC and service authorization information to the UE.

The UE is any one of a source UE, a target UE and a U2U relay. The security indicator is used to indicate which security procedure to use uniformly when the source UE, the target UE, and the U2U relay discover each other and obtain the service (any service in these open-permission services) via the U2U relay, which ensures that the peer UEs use the same security procedure in protecting communication between the source UE to the target UE via the U2U relay.

For example, if the security indicator associated with the RSC is an E2E security indicator, it may be determined that the security procedure for establishing the U2U link under the RSC is the E2E security procedure. If the security indicator associated with the RSC is empty, it may be determined that the security procedure for establishing the U2U link under the RSC is the hop-by-hop security procedure.

This optional mode is equivalent to the first network element sending a new security indicator to the UE, so that the UE can determine, according to the new security indicator, the security procedure for establishing the U2U link under the RSC. In addition, the embodiments may also use an existing indicator to indicate which security procedure the UE uses. In some examples, the security indicator associated with the authorized RSC returned in step 603 may be an indicator for a Layer-2 or Layer-3 U2U relay service allowed to be used for this RSC (i.e., offered by the RSC).

For example, if the UE receives the indicator for the Layer-3 U2U relay service allowed to be used for the RSC, it can determine that the security procedure for establishing the U2U link under this RSC is the hop-by-hop security procedure. If the UE receives the indicator for the Layer-2 U2U relay service allowed to be used for the RSC, it can determine that the security procedure for establishing the U2U link under the RSC is the E2E security procedure.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

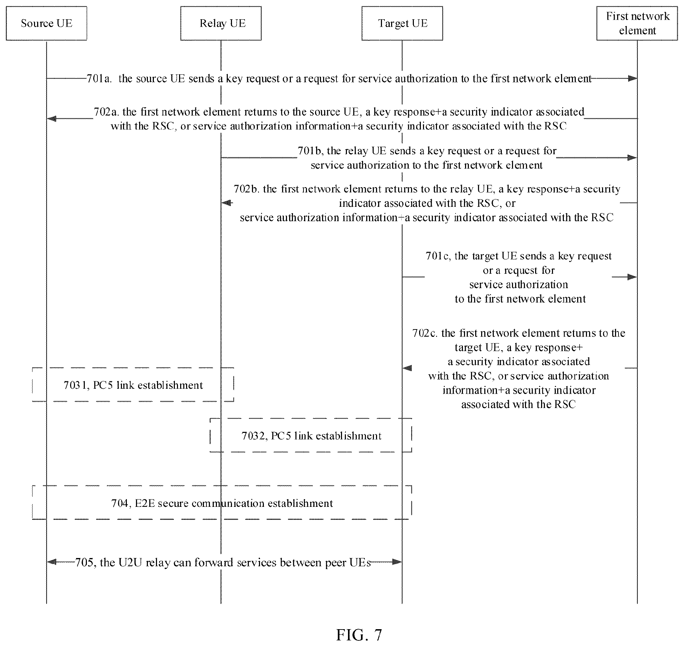

FIG. 7 is a sequence diagram of a relay communication processing method according to an embodiment of the disclosure. The method is performed bya relay communication processing system, which includes a UE and a first network element. The UE is configured to perform the method shown in FIGS. 1-3, and the first network element is configured to perform the method shown in FIGS. 4-6.

As illustrated in FIG. 7, the method shown in the sequence diagram includes the following steps.

At step 701a, a source UE sends a key request or a request for service authorization to the first network element.

The key carries an RSC. The first network element may be a network element on the network side. In some examples, the first network element may be one of a PCF network element, a PKMF network element, a DDNMF network element and a ProSe application server, or may be any one of other network elements in a core network.

At step 702a, the first network element sends to the source UE, a key response and a security indicator associated with the RSC in the key request, or service authorization information and a security indicator associated with an authorized RSC.

At step 701b, executed in parallel to step 701a, a relay UE sends a key request or a request for service authorization to the first network element.

At step 702b, the first network element sends to the relay UE, a key response and a security indicator associated with the RSC in the key request, or service authorization information and a security indicator associated with an authorized RSC.

At steps 701c, executed in parallel to step 701a and step 701b, the target UE sends a key request or a request for service authorization to the first network element.

At step 702c, the first network element sends to the target UE, a key response and a security indicator associated with the RSC in the key request, or service authorization information and a security indicator associated with an authorized RSC.

The above steps 701a-702a, 701b-702b, and 701c-702c are three parallel execution processes. There is no order among these parallel execution processes, and they are independent of each other.

For example, the key request sent by a UE (such as any one of the source UE, the target UE and the U2U relay) carries an RSC associated with a target service. According to the RSC carried in the key request, the first network element determines the security procedure associated with the RSC for establishing the U2U link, such as E2E security procedure, and determines, according to the security procedure, the security indicator associated with the RSC, such as an E2E security indicator. The security indicator is used to indicate which security procedure to use uniformly when the source UE, the target UE, and the U2U relay discover each other and obtain the a target service via the U2U relay, i.e., the process shown in step 704 is executed.

For another example, when the UE (such as any one of the source UE, the target UE and the relay UE) registers to the network, the UE will send the request for service authorization to the first network element, and the first network element will then grant the UE permissions to use certain services, that is, return service authorization information. The first network element determines, based on the RSCs associated with these open-permission services, the security procedure associated with each RSC for establishing the U2U link, and determines the security indicator associated with each RSC according to the security procedure associated with each RSC. The security indicator is used to indicate which security procedure to use uniformly when the source UE, the target UE, and the U2U relay discover each other and obtain the service (any service in these open-permission services) through the U2U relay. For example, the process shown in step 703 is executed when the hop-by-hop security procedure is used, which ensures that the peer UEs use the same security procedure in protecting communication between the source UE to the target UE via the U2U relay.

At step 703, a hop-by-hop secure communication is established.

In detail, step 703 specifically includes: step 7031 and step 7032. At step 7031, a PC5 link between the source UE and the U2U relay is established. At step 7032, a PC5 link between the U2U relay and the target UE is established.

At step 704, an E2E secure communication is established.

In detail, the E2E secure communication is directly established between the source UE and the target UE.

It should be noted that there is no sequential execution order between step 704 and step 703, and they are independent of each other.

At step 705, the U2U relay can forward services between peer UEs.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

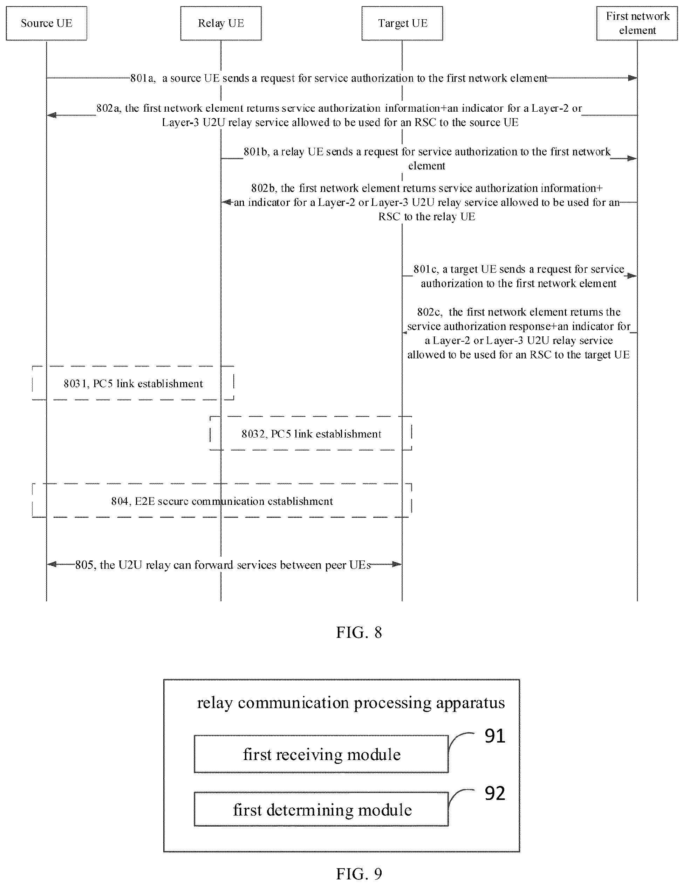

The embodiment in FIG. 7 is equivalent to the first network element sending a new security indicator to the UE, so that the UE can determine, according to the new security indicator, the security procedure for establishing the U2U link under the RSC. In addition, the embodiments may also use an existing indicator to indicate which security procedure the UE uses. Correspondingly, FIG. 8 is a sequence diagram of a relay communication processing method according to an embodiment of the disclosure. As illustrated in FIG. 8, the method in the sequence diagram includes the following steps.

At step 801a, a source UE sends a request for service authorization to the first network element.

The first network element may be a network element on the network side. In some examples, the first network element may be one of a PCF network element, a PKMF network element, a DDNMF network element and a ProSe application server, or may be any one of other network elements in a core network.

At step 802a, the first network element returns service authorization information and an indicator for a Layer-2 or Layer-3 U2U relay service allowed to be used for an RSC to the source UE.

At step 801b, parallel to step 801a, a relay UE sends a request for service authorization to the first network element.

At step 802b, the first network element returns service authorization information and an indicator for a Layer-2 or Layer-3 U2U relay service allowed to be used for an RSC to the relay UE.

At step 801c, parallel to step 801a and step 801b, a target UE sends a request for service authorization to the first network element.

At step 802c, the first network element returns the service authorization information and an indicator for a Layer-2 or Layer-3 U2U relay service allowed to be used for an RSC to the target UE.

The above steps 801a-802a, steps 801b-802b and steps 801c-802c are three parallel execution processes. There is no order among these parallel execution processes, and they are independent of each other.

For example, when the UE (such as any one of the source UE, the target UE and the relay UE) registers to the network, the UE will send the request for service authorization to the first network element, and the first network element will then grant the UE permissions to use certain services. The first network element determines, based on the RSCs associated with these open-permission services, the security procedure associated with each RSC for establishing the U2U link, and determines the security indicator associated with each RSC according to the security procedure associated with each RSC. The security indicator is the indicator for the Layer-2 or Layer-3 U2U relay service allowed to be used for the RSC. The security indicator is used to indicate which security procedure to use uniformly when the source UE, the target UE, and the U2U relay discover each other and obtain the service (any service in these open-permission services) through the U2U relay.

If the UE receives the indicator for the Layer-3 U2U relay service allowed to be used for the RSC, it may determine that the security procedure for establishing the U2U link under the RSC is the hop-by-hop security procedure, that is, the process shown in step 803 is executed. However, if the UE receives the indicator for the Layer-3 U2U relay service allowed to be used for the RSC, it can determine that the security procedure for establishing the U2U link under the RSC is the E2E security procedure, that is, the process shown in step 804 is executed, which ensures that the peer UEs use the same security procedure in protecting communication between the source UE to the target UE via the U2U relay.

At step 803, a hop-by-hop secure communication is established.

In detail, step 803 specifically includes step 8031 and step 8032. At step 8031, a PC5 link between the source UE and the U2U relay is established. At step 8032, a PC5 link between the U2U relay and the target UE is established.

At step 804, an E2E secure communication is established.

In detail, the E2E secure communication is directly established between the source UE and the target UE.

It should be noted that there is no sequential execution order between step 804 and step 803, and they are independent of each other.

At step 805, the U2U relay can forward services between peer UEs.

By applying the relay communication processing method provided by the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

In the above-mentioned embodiments provided in the disclosure, the methods provided in the embodiments of the disclosure are introduced from the perspectives of the network device and the UE, respectively. In order to implement the various functions in the methods provided in the above-mentioned embodiments of the disclosure, the network device and the UE may include a hardware structure and a software module to implement the above-mentioned functions in the form of a hardware structure, a software module or a combination of the hardware structure and the software module. Any of the above functions may be implemented in the form of the hardware structure, the software module or the combination of the hardware structure and the software module.

Corresponding to the relay communication processing methods provided in the above-mentioned embodiments, the disclosure also provides corresponding relay communication processing apparatuses. Since the relay communication processing apparatuses provided in the embodiments of the disclosure correspond to the relay communication processing methods provided in the above-mentioned embodiments, the implementations in the relay communication processing methods are also applicable to the relay communication processing apparatuses provided in the following embodiments and will not be described in detail in the embodiments.

FIG. 9 is a schematic diagram of a relay communication processing apparatus according to an embodiment of the disclosure. The relay communication processing apparatus may be applied to a UE.

As illustrated in FIG. 9, the apparatus includes: a first receiving module 91, configured to receive a security indicator associated with an RSC sent by a first network element; and a first determining module 92, configured to determine, based on the security indicator, a security procedure for establishing a U2U link under the RSC.

In some embodiments, the first determining module 92 is configured to: send a key request to the first network element, in which the key request carries an RSC. The first receiving module 91 is configured to: receive a key response and the security indicator associated with the RSC carried in the key request returned by the first network element.

In some embodiments, the first determining module 92 is configured to: send a request for service authorization to the first network element. The first receiving module 91 is configured to: receive service authorization information and a security indicator associated with an authorized RSC returned by the first network element.

In some embodiments, the security indicator associated with the authorized RSC is an indicator for a Layer-2 or Layer-3 U2U relay service allowed to be used for the RSC. The first determining module 92 is configured to: determine, based on the indicator for the Layer-2 or Layer-3 U2U relay service allowed to be used for the RSC, the security procedure for establishing the U2U link under the RSC.

In some embodiments, the first determining module 92 is configured to: store the security indicator associated with the RSC, and determine, based on the stored security indicator associated with the RSC, the security procedure for establishing the U2U link under the RSC.

In some embodiments, the security procedure includes at least one of: hop-by-hop security protection or E2E security protection.

In some embodiments, the first network element includes one of: a PCF network element, a PKMF network element, a DDNMF network element and a ProSe application server.

In the embodiments of the disclosure, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

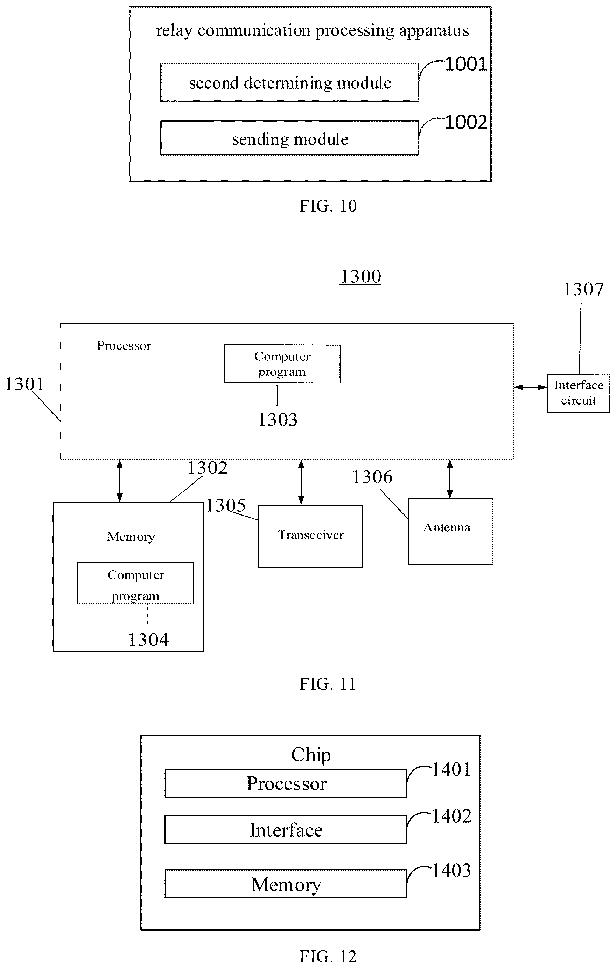

FIG. 10 is a schematic diagram of a relay communication processing apparatus according to an embodiment of the disclosure. The relay communication processing apparatus may be applied to a first network element.

As illustrated in FIG. 10, the apparatus includes: a second determining module 1001, configured to determine a security procedure associated with an RSC for establishing a U2U link; and a sending module 1002, configured to send a security indicator associated with the RSC to a UE according to the security procedure.

In some embodiments, the second determining module 1001 is configured to: receive a key request sent by the UE, in which the key request carries the RSC. The sending module 1002 is configured to: return the security indicator associated with the RSC and a key response to the UE according to the security procedure.

In some embodiments, the second determining module 1001 is configured to: receive a request for service authorization sent by the UE. The sending module 1002 is configured to: return the security indicator associated with the RSC and service authorization information to the UE according to the security procedure.

In some embodiments, the security indicator associated with the authorized RSC is an indicator for a Layer-2 or a Layer-3 U2U relay service allowed to be used for the RSC.

In some embodiments, the security procedure includes at least one of: hop-by-hop security protection or E2E security protection.

In some embodiments, the first network element includes one of: a PCF network element, a PKMF network element, a DDNMF network element and a ProSe application server.

In the embodiment, the first network element on the network side determines the security procedure associated with the RSC for establishing the U2U link, and then sends the security indicator associated with the RSC to the UE according to the security procedure. In this way, the source UE, the target UE and the relay UE that receive the security indicator may determine, based on the security indicator associated with the RSC, the security procedure for establishing the U2U link under the RSC. By applying the technical solution of the disclosure, it may be ensured that the source UE and the target UE who communicate with each other via the relay UE may use the same security procedure, enabling communication between the source UE and the target UE while ensuring the communication is securely protected, thereby improving the security of 5G U2U ProSe.

FIG. 11 is a schematic diagram of a communication apparatus 1300 provided by an embodiment. The communication apparatus 1300 may be a network device or a UE, or a chip, a chip system or a processor that supports the network device to realize the above-described method, or a chip, a chip system or a processor that supports the UE to realize the above-described method. The device may be used to realize the methods described in the above method embodiments with reference to the descriptions of the above-described method embodiments.

The communication apparatus 1300 may include one or more processors 1301. The processor 1301 may be a general purpose processor or a dedicated processor, such as, a baseband processor or a central processor. The baseband processor is used for processing communication protocols and communication data, and the central processor is used for controlling the communication apparatus (e.g., base station, baseband chip, terminal, terminal chip, central unit (CU) or distributed unit (DU)), executing computer programs, and processing data of the computer programs.

In some embodiments of the disclosure, the communication apparatus 1300 may further include one or more memories 1302 on which a computer program 1304 is stored. When the processor 1301 executes the computer program 1304, the communication apparatus 1300 is caused to perform the methods described in the above method embodiments. In an embodiment of the disclosure, data may also be stored in the memory 1302. The communication apparatus 1300 and the memory 1302 may be provided separately or integrated together.

In some embodiments of the disclosure, the communication apparatus 1300 may also include a transceiver 1305 and an antenna 1306. The transceiver 1305 may be referred to as transceiver unit, transceiver machine or transceiver circuit, for realizing a transceiver function. The transceiver 1305 may include a receiver and a transmitter. The receiver may be referred to as receiver machine or receiving circuit, for realizing a receiving function. The transmitter may be referred to as transmitter machine or transmitting circuit, for realizing a transmitting function.

In some embodiments of the disclosure, the communication apparatus 1300 may also include one or more interface circuits 1307. The interface circuits 1307 are used to receive code instructions and transmit them to the processor 1301. The processor 1301 runs the code instructions to cause the communication apparatus 1300 to perform the methods described in the method embodiments.

In an implementation, the processor 1301 may include a transceiver for implementing the receiving and transmitting functions. The transceiver may be, for example, a transceiver circuit, an interface or an interface circuit. The transceiver circuit, interface or interface circuit for implementing the receiving and transmitting functions may be separated or integrated together. The transceiver circuit, interface or interface circuit described above may be used for code/data reading and writing or may be used for signal transmission or delivery.

In an implementation, the processor 1301 may store a computer program 1303 that may be executed by the processor 1301 and may cause the communication apparatus 1300 to perform the methods described in the method embodiments above. The computer program 1303 may be solidified in the processor 1301, in which case the processor 1301 may be implemented by hardware.

In an implementation, the communication apparatus 1300 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the descriptions of the above embodiments may be a network device or a UE, but the scope of the communication apparatus described in the disclosure is not limited thereto, and the structure of the communication apparatus may not be limited by FIG. 11. The communication apparatus may be a stand-alone device or may be part of a larger device. For example, the communication apparatus may be:
(1) a stand-alone IC, chip, chip system or subsystem;
(2) a collection of ICs including one or more ICs, in an embodiment of the disclosure, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

For the case where the communication apparatus may be a chip or a chip system, reference may be made to the schematic diagram of the chip shown in FIG. 12. The chip shown in FIG. 12 includes a processor 1401 and an interface 1402. There may be one or more processors 1401, and there may be a plurality of interfaces 1402.

In an embodiment of the disclosure, the chip further includes a memory 1403, and the memory 1403 is configured to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having an instruction stored thereon. When the instruction is executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer readable storage medium or transmitted from one computer readable storage medium to another computer readable storage medium. For example, the computer program may be transmitted from one web site, computer, server or data center to another web site, computer, server or data center, in a wired manner (e.g., by using coaxial cables, fiber optics or digital subscriber lines (DSLs) or wirelessly (e.g., by using infrared wave, wireless wave or microwave). The computer readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second" and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four or more, which is not limited in the disclosure. In the embodiment of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

As used herein, the terms "machine readable medium" and "computer readable medium" refer to any computer program product, apparatus and/or device (e.g., disk, optical disk, memory, programmable logic device (PLD)) for providing machine instructions and/or data to a programmable processor, including machine readable mediums that receive machine instructions as machine readable signals. The term "machine-readable signal" refers to any signal used to provide machine instructions and/or data to a programmable processor.

The systems and technologies described herein may be implemented in a computing system that includes back-end components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of the back-end components, the middleware components and the front-end components. The components of the system may be interconnected by any form or medium of digital data communication (e.g., a communication network). Examples of communication networks include: a Local Area Network (LAN), a Wide Area Network (WAN), and the Internet.

The computer system may include a client and a server. The client and the server are generally remote from each other and interacting through a communication network. The client-server relation is generated by computer programs running on the respective computers and having a client-server relation with each other.

It is understandable that the steps may be reordered, added or deleted using various forms of the processes shown above. For example, the steps in the disclosure may be performed in parallel, sequentially or in different orders, as long as the desired results of the technical solutions disclosed in the disclosure are achieved, which are not limited herein.

In addition, it should be understood that the embodiments described in the disclosure may be implemented separately or in combination with other embodiments if the solution permits.

Those skilled in the art may realize that the units and algorithmic steps of the examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A relay communication processing method, performed by a user equipment (UE), comprising:
receiving a security indicator associated with a relay service code (RSC) sent by a first network element; and
determining, based on the security indicator, a security procedure for establishing a UE to UE (U2U) link under the RSC.

2. The method of claim 1, wherein before receiving the security indicator associated with the RSC sent by the first network element, the method further comprises:
sending a key request to the first network element, wherein the key request carries an RSC; and
wherein receiving the security indicator associated with the RSC sent by the first network element comprises:
receiving a key response and the security indicator associated with the RSC carried in the key request returned by the first network element.

3. The method of claim 1, wherein before receiving the security indicator associated with the RSC sent by the first network element, the method further comprises:
sending a request for service authorization to the first network element; and
wherein receiving the security indicator associated with the RSC sent by the first network element comprises:
receiving service authorization information and a security indicator associated with an authorized RSC returned by the first network element.

4. The method of claim 3, wherein the security indicator associated with the authorized RSC is an indicator for a Layer-2 or Layer-3 U2U relay service allowed to be used for the RSC;
wherein determining, based on the security indicator, the security procedure for establishing the U2U link under the RSC comprises:
determining, based on the indicator for the Layer-2 or Layer-3 U2U relay service allowed to be used for the RSC, the security procedure for establishing the U2U link under the RSC.

5. The method of claim 1, wherein after receiving the security indicator associated with the RSC sent by the first network element, the method further comprises:
storing the security indicator associated with the RSC; and
wherein determining, based on the security indicator, the security procedure for establishing the U2U link per RSC comprises:
determining, based on the stored security indicator associated with the RSC, the security procedure for establishing the U2U link under the RSC.

6. The method of any one of claims 1-5, wherein the security procedure comprises at least one of:
hop-by-hop security protection; or
end-to-end security protection.

7. The method of any one of claims 1-6, wherein the first network element comprises one of:
a policy control function (PCF) network element;
a proximity-based services (ProSe) key management function (PKMF) network element;
a direct discovery name management function (DDNMF) network element; and
a ProSe application server.

8. A relay communication processing method, performed by a first network element, comprising:
determining a security procedure associated with a relay service code (RSC) for establishing a user equipment (UE) to UE (U2U) link; and
sending a security indicator associated with the RSC to a UE according to the security procedure.

9. The method of claim 8, wherein before determining the security procedure associated with the RSC for establishing the U2U link, the method further comprises:
receiving a key request sent by the UE, wherein the key request carries the RSC;
wherein sending the security indicator associated with the RSC to the UE according to the security procedure comprises:
returning the security indicator associated with the RSC and a key response to the UE according to the security procedure.

10. The method of claim 8, wherein before determining the security procedure associated with the RSC for establishing the U2U link, the method further comprises:
receiving a request for service authorization sent by the UE;
wherein sending the security indicator associated with the RSC to the UE according to the security procedure comprises:
returning the security indicator associated with the RSC and service authorization information to the UE according to the security procedure.

11. The method of claim 10, wherein the security indicator associated with the RSC is an indicator for a Layer-2 or a Layer-3 U2U relay service allowed to be used for the RSC.

12. The method of any one of claims 8-11, wherein the security procedure comprises at least one of:
hop-by-hop security protection; or
end-to-end security protection.

13. The method of any one of claims 8-12, wherein the first network element comprises one of:
a policy control function (PCF) network element;
a proximity-based services (ProSe) key management function (PKMF) network element;
a direct discovery name management function (DDNMF) network element; and
a ProSe application server.

14. A relay communication processing apparatus, configured to a user equipment (UE), comprising:
a first receiving module, configured to receive a security indicator associated with a relay service code (RSC) sent by a first network element; and
a first determining module, configured to determine, based on the security indicator, a security procedure for establishing a UE to UE (U2U) link under the RSC.

15. A relay communication processing apparatus, configured to a first network element, comprising:
a second determining module, configured to determine a security procedure associated with a relay service code (RSC) for establishing a user equipment (UE) to UE (U2U) link; and
a sending module, configured to send a security indicator associated with the RSC to a UE according to the security procedure.

16. A relay communication processing system, comprising: a user equipment (UE) and a first network element;
wherein the UE performs the method of any one of claims 1-7; and
the first network element performs the method of any one of claims 8-13.

17. A communication apparatus, comprising: a transceiver, a memory and a processor connected to the transceiver and the memory, respectively, wherein the processor is configured to control wireless signal reception and transmission of the transceiver by executing computer executable instructions on the memory, and is capable of implementing the method of any one of claims 1-13.

18. A computer storage medium, wherein the computer storage medium stores computer executable instructions, and after the computer executable instructions are executed by a processor, the method according to any one of claims 1-13 is implemented.
